# EUROPÄISCHE PATENTSCHRIFT

(11) **EP 3 137 246 B1**
(45) Veröffentlichungstag und Bekanntmachung des Hinweises auf die Patenterteilung: **05.06.2019**
(21) Anmeldenummer: 15724930.1
(22) Anmeldetag: 30.04.2015
(51) Int. Cl.: B22C 1/22, B28B 1/00, B29C 67/00

(54) **VERFAHREN ZUM SCHICHTWEISEN AUFBAU VON KÖRPERN UMFASSEND FEUERFESTEN FORMGRUNDSTOFF UND RESOLE**
METHOD FOR THE LAYER-WISE BUILDING OF BODIES COMPRISING REFRACTORY MOLD BASE MATERIAL AND RESOLES
PROCÉDÉ DE FABRICATION PAR COUCHES DE CORPS COMPRENANT UN PRODUIT DE DÉPART DE MOULAGE RÉFRACTAIRE ET DES RÉSOLS

(30) Priorität: 02.05.2014 DE 102014106178
(43) Veröffentlichungstag der Anmeldung: 08.03.2017
(73) Patentinhaber: ASK Chemicals GmbH, 40721 Hilden (DE)
(72) Erfinder: BARTELS, Dennis, 46284 Dorsten (DE); GIENIEC, Antoni, 40724 Hilden (DE)
(74) Vertreter: Müller Schupfner & Partner Patent- und Rechtsanwaltspartnerschaft mbB
(86) Internationale Anmeldenummer: PCT/DE2015/000208
(87) Internationale Veröffentlichungsnummer: WO 2015/165437

(56) Entgegenhaltungen:
- EP-B1- 1 638 758
- WO-A1-2014/166469
- US-A- 5 405 881

## Beschreibung

Die Erfindung betrifft ein Verfahren zum schichtweisen Aufbau von Körpern umfassend feuerfesten Formgrundstoff und Resole.

Unter der Bezeichnung Rapid Prototyping sind verschiedene Methoden zur Herstellung dreidimensionaler Körper durch schichtweisen Aufbau bekannt. Ein Vorteil dieser Verfahren ist die Möglichkeit, auch komplexe, aus einem Stück bestehende Körper mit Hinterschneidungen und Hohlräumen herzustellen. Mit konventionellen Methoden müssten diese Körper aus mehreren, einzeln gefertigten Teilen zusammengefügt werden. Ein weiterer Vorteil besteht darin, dass die Verfahren in der Lage sind, die Körper ohne Formwerkzeuge direkt aus den CAD-Daten herzustellen.

In der EP 0538244 B1 wird das sogenannte Selektive-Laser-Sintering-Verfahren (SLS-Verfahren) beschrieben. Nach diesem Patent wird Pulver in Form von beispielsweise losen Metall- oder Kunststoffpartikeln mit Hilfe einer Trommel auf einen Körper in einheitlichen Schichten aufgebracht und durch einen schwenkbaren Laserstrahl selektiv an den durch das CAD-Programm vorgegebenen Stellen angeschmolzen, so dass sie dort sowohl innerhalb der Schicht als auch mit der darunterliegenden Schicht verkleben. Bevorzug findet ein sintern statt. Nach der Fertigstellung des dreidimensionalen Körpers kann dieser aus den nicht gebundenen Partikeln entfernt, einer weiteren Behandlung oder seiner endgültigen Verwendung zugeführt werden.

Ein weiteres Beispiel für schichtweise Herstellung von Formkörpern stellt die EP 0711213 B1 dar. Darin werden die losen Körner eines geeigneten Formgrundstoffes, z.B. Quarzsand, die mit einem reaktiven Bindemittel umhüllt sind, schichtweise selektiv miteinander verbunden, indem das Bindemittel durch Energieeintrag mittels einer elektromagnetischen Strahlung, z.B. in Form eines Infrarot-Lasers ausgehärtet wird. Als geeignete Formgrundstoffe werden außer Quarzsand noch Zirkonsand, Olivinsand, Chromitsand, Schamotte, Korund oder Carbonsand sowie Mischungen davon genannt.

Geeignete Bindemittel sind sind warm- oder heißbindende Harze aus der Gruppe der Furan-, Harnstoff- oder Aminoharze, Harnstoff-Formaldehyd-Harze, Furfurylalkohol-Harnstoff-Formaldehydharze, phenolmodifizierten Furanharze, Phenol-Formaldehydharze, Furfurylalkohol-Phenol-Formaldehydharze, acrylmodifizierte Phenolharze, Acrylharze oder Polyacrylharze umfaßt, die jeweils in flüssiger, fester, granulierter oder pulverförmiger Form vorliegen. Zur Erlangung seiner vollständigen Festigkeit kann der durch wiederholtes Aufbringen und Verfestigen einer Schicht gefertigte dreidimensionale Körper nach der Entfernung des ungebundenen Formstoffs ggfs. nachgehärtet werden, z.B. durch Erwärmen in einem Ofen oder durch Mikrowellen.

Nach der EP 0882568 B1 ist der lose Formgrundstoff mit einem geeigneten Bindemittel, z.B. einem Phenol-Formaldehydharz, wie einem Novolak oder einem Resol, umhüllt. Zur Herstellung des dreidimensionalen Körpers wird zunächst per Drucktechnik schichtweise selektiv ein sog. Modifizierungsmittel, z.B. ein Alkohol oder eine Säure, aufgebracht. Dieses dient dazu, den im zweiten Schritt folgenden Verfestigungsschritt, d.h. die thermische Aushärtung, entweder zu hemmen oder zu beschleunigen. Welche der beiden Varianten ausgeführt wird, hängt von der gewählten Arbeitsweise ab. Stellt das Modifizierungsmittel einen Reaktionshemmer dar, härtet die Formgrundstoff/Bindermischung unter Bildung des gewünschten Formteils beim Erwärmen an den Stellen aus, die nicht mit dem Modifizierungsmittel behandelt wurden. Im Falle eines Reaktionsbeschleunigers dagegen reagieren das Bindemittel und der latente Härter an den mit dem Modifizierungsmittel versehenen Stellen miteinander und verbinden dort die bis dahin losen Partikel zum fertigen Bauteil. Dieses kann anschließend wie üblich vom losen, nicht ausgehärteten Formstoff/Bindergemisch befreit werden.

EP 1324842 B1 offenbart ein Verfahren, bei dem der lose Formgrundstoff, aus dem der dreidimensionale Körper aufgebaut werden soll, schichtweise selektiv mit einem Bindemittel versehen wird. Der Bindemittelauftrag erfolgt dabei analog der Arbeitsweise eines Tintenstrahldruckers mittels eines dünnen Strahls oder eines Bündels dünner Strahlen. Die Aushärtung erfolgt erst dann, wenn alle für die Herstellung des dreidimensionalen Körpers notwendigen Schichten fertig gestellt sind. Die Härtungsreaktion wird beispielsweise durch Fluten des gesamten Bauteils mit einem Härter, vorzugsweise einem Gas, ausgelöst.

In WO 01/68336 A2 wird der Binder, z.B. ein Furanharz, ein Phenolharz oder ein Resol Ester, schichtweise nicht selektiv, sondern über die gesamte Arbeitsfläche des losen Formstoffes aufgesprüht und danach ebenfalls schichtweise durch selektives Aufbringen eines Härters wie einer organischen Säure ausgehärtet.

EP 1268165 B1 variiert dieses Verfahren, indem ein flüssiger Binder schichtweise nicht auf die gesamte Arbeitsfläche des losen Formstoffs aufgesprüht, sondern selektiv nur auf die später auszuhärtenden Teilbereiche des Formstoffs aufgetragen wird. Die Aushärtung erfolgt durch schichtweisen selektiven Auftrag eines flüssigen Härters.

Eine Weiterentwicklung dieses Verfahrens stellt EP 1509382 B1 dar, nach deren Lehre der Binder nicht schichtweise selektiv auf den Formstoff aufgedruckt wird, sondern es wird eine Formstoff-/Bindermischung hergestellt, die dann durch einen schichtweisen selektiven Auftrag des Härters an den durch das CAD-Programm vorgegebenen Stellen ausgehärtet wird.

In EP 1638758 B1 wird die Reihenfolge der Zugabe umgekehrt. Zuerst wird der Formstoff mit einem Aktivator (Härter) vorgemischt und danach der Binder schichtweise selektiv aufgetragen. Als Härter werden u.a. Säuren, z.B. wässrige p-Toluolsulfonsäure, und als Binder Phenolharze, Polyisocyanate, Polyurethane, Epoxiharze, Furanharze, Polyurethan Polymere, Phenol Polyurethane, Phenol- Formaldehyd Furfuryl Alkohole, Urea-Formaldehyde Furfuryl Alkohole, Formaldehyd Furfuryl Alkohole, Peroxide, Polyphenolharze, Resolester, Silicate (z.B. Natriumssilikat), Salz, Gips, Bentonit, wasserlösliche Polymere, Organische Säure, Kohlenhydrate, Zucker, Zuckeralkohole oder Proteine erwähnt.

Insbesondere das System Säure/Furanharz entsprechend EP 1638758 B1 hat in der Praxis eine weite Verbreitung gefunden und wird bei der Entwicklung neuer Gussteile sowie bei der Herstellung von Einzelteilen oder kleinen Serien eingesetzt, bei denen die konventionelle Fertigung mit Formwerkzeugen zu aufwendig und zu teuer wäre.

Trotz seiner Vorteile, wie z.B. Geschwindigkeit bei der Herstellung, hoher Formstabilität und guter Lagerstabilität der Gießformen etc. besteht noch Bedarf für Verbesserungen. Ein Nachteil besteht z.B. darin, dass mit einem säuregehärteten Furanharz gebundene Gießformen beim Abguss zumindest im Eisenguss frühzeitig zerfallen können was zu erheblichen Gussfehlern führen kann.

Aufgabestellung ist also eine Formstoff / Bindemittel / Härter Kombination zur Verfügung zu stellen, welche die Herstellung von Gießformen nach dem Rapid-Prototyping-Verfahren ermöglicht, die beim Abguss thermisch stabiler sind und weniger zur Gasbildung neigen.

Die Aufgabe wird durch ein Verfahren zur Herstellung von Gießformen mit den Merkmalen des Anspruchs 1 gelöst. Vorteilhafte Weiterbildungen sind Gegenstand der abhängigen Patentansprüche oder werden nachstehend beschrieben.

Die nach dem erfindungsgemäßen Verfahren erhältliche Gießform umfasst mindestens
a) einen feuerfesten Formgrundstoff,
b) ein mittels eines Esters (Härter) ausgehärtetes alkalisches Resolharz (Bindemittel) und
c) ggfs. ein anorganisches Additiv;
und vorzugsweise
a) einen feuerfesten Formgrundstoff,
b) ein mittels eines Esters ausgehärtetes alkalisches Resolharz und
c) ein anorganisches Additiv.

### Detaillierte Beschreibung der Erfindung

Als feuerfester Formgrundstoff (nachfolgend auch kurz Formgrundstoff) können für die Herstellung von Gießformen übliche und bekannte Materialien verwendet werden. Geeignet sind beispielsweise Quarz-, Zirkon- oder Chromerzsand, Olivin, Vermiculit, Bauxit, Schamotte sowie künstliche Formgrundstoffe, insbesondere mehr als 50 Gew.% Quarzsand bezogen auf den feuerfesten Formgrundstoff. Unter einem Formgrundstoff werden Stoffe verstanden, die einen hohen Schmelzpunkt (Schmelztemperatur) aufweisen. Vorzugsweise ist der Schmelzpunkt des feuerfesten Formgrundstoffs größer als 600°C, bevorzugt größer als 900°C, besonders bevorzugt größer als 1200°C und insbesondere bevorzugt größer als 1500°C. Der feuerfeste Formgrundstoff weist einen rieselfähigen Zustand auf.

Der Formgrundstoff macht vorzugsweise größer 80 Gew.%, insbesondere größer 90 Gew.%, besonders bevorzugt größer 95 Gew.%, der Formstoffmischung aus.

Der mittlere Durchmesser der feuerfesten Formgrundstoffe liegt in der Regel zwischen 100 µm und 600 µm, bevorzugt zwischen 120 µm und 550 µm und besonders bevorzugt zwischen 150 µm und 500 µm. Die Partikelgröße lässt sich z.B. durch Siebung nach DIN ISO 3310 bestimmen. Besonders bevorzugt sind Teilchenformen mit größter Längenausdehnung zu kleinster Längenausdehnung (rechtwinkelig zueinander und jeweils für alle Raumrichtungen) von 1:1 bis 1:5 oder 1:1 bis 1 : 3, d.h. solche die z.B. nicht faserförmig sind.

Besonders geeignet ist dabei ein spezieller Chromitsand, der unter der Bezeichnung Spherichrome® von Oregon Resources Corporation (ORC) vertrieben wird. In Europa wird Spherichrome® von Possehl Erzkontor GmbH, Lübeck, vertrieben. Spherichrome® unterscheidet sich in der Kornform vom bisher bekannten südafrikanischen Chromerzsand. Im Gegensatz zu letzterem besitzt Spherichrome® weitgehend gerundete Körner. Spherichrome® macht nach der bevorzugten Ausführungsform nicht notwendig 100 Gew.% des Formgrundstoffs aus, auch Mischungen mit anderen Formgrundstoffen sind möglich, vor allem Quarzsand. Das Mischungsverhältnis richtet sich dabei nach der jeweiligen Beanspruchung der Gießform. In aller Regel sollte diese bei Verwendung von Quarzsand jedoch mindestens 20 Gew.% Spherichrome® enthalten, bevorzugt mindestens 40 Gew.%, besonders bevorzugt mindestens 60 Gew.%. Unabhängig hiervon weist der Formgrundstoff Teilchenformen im Verhältnis (Mittel) von größter Längenausdehnung zu kleinster Längenausdehnung (rechtwinkelig zueinander und jeweils für alle Raumrichtungen) von insbesondere 1:1 bis 1 : 3 auf, besonders bevorzugt von insbesondere 1:1 bis 1 : 3 zu mindestens zu 20 Gew.%, bevorzugt mindestens 40 Gew.%, und besonders bevorzugt mindestens 60 Gew.%. auf.

Das Bindemittel sind alkalische Resolharze. Die Resole werden durch Kondensation von Hydroxy Aromaten und Aldehyden in Gegenwart eines basischen Katalysators hergestellt.

Üblicherweise werden die Resole in einer Konzentration von ca. 0,8 Gew.% bis ca. 5 Gew.%, bevorzugt von ca. 1 Gew.% bis ca. 4 Gew.% und besonders bevorzugt von ca. 1 Gew.% bis ca. 3,5 Gew.% eingesetzt, jeweils bezogen auf den Formgrundstoff. Dabei kann die Konzentration an Bindemittel innerhalb der Gießform variieren. Bei dickeren Teilbereichen der Form kann der Bindemittelanteil durchaus geringer sein als oben angegeben, während an dünnen und komplexen Partien der Bindergehalt über den oben erwähnten Grenzwert hinausgehen kann.

Resole im Sinn der vorliegenden Erfindung sind über Methylengruppen (-CH₂-) Gruppen und/oder über Etherbrücken (insbesondere -CH₂-O-CH₂-) miteinander verbundene Aromaten, die jeweils zumindest eine - OH Gruppe tragen (Hydroxy-Aromat).

Geeignete Hydroxy-Aromaten sind Phenole, substituierte Phenole, wie z.B. Kresole oder Nonylphenol, 1,2-Dihydroxybenzol (Brenzcatechin), 1,2-Dihydroxybenzol (Resorcin), Cashewnussschalenöl, d.h. eine Mischung aus Cardanol und Cardol, oder 1,4-Dihydroxybenzol (Hydrochinon) oder phenolische Verbindungen wie z.B. Bisphenol A. Die Resole sind erhältlich z.B. durch Kondensation eines oder mehrerer Hydroxy-Aromaten mit einem oder mehreren Aldehyden, insbesondere in Gegenwart eines basischen Katalysators, wie Ammoniumhydroxid oder eines Alkalimetallhydroxids, hergestellt. Bevorzugt werden Alkalimetallhydroxid-Katalysatoren verwendet.

Als Aldehyde sind geeignet Formaldehyd, Paraformaldehyd, Butyraldehyd, Glyoxal und deren Mischungen. Besonders bevorzugt ist Formaldehyd oder Mischungen enthaltend überwiegend (bezogen auf molare Menge der Aldehyde) Formaldehyd.

Das molare Verhältnis von Phenol zu Aldehyd kann im Bereich von 1:1 bis 1:3 variieren, liegt aber bevorzugt zwischen 1:1,2 bis 1:2,6, besonders bevorzugt zwischen 1:1,3 bis 1:2,5.

Es sind solche Resole bevorzugt, in denen benachbarte Hydroxy-Aromaten jeweils an ortho und/oder para - Position (relativ zur Hydroxy-Gruppe des eingebauten Phenols/Aromaten) über die Methylenbrücken und/oder die Etherbrücken verknüpft sind, d.h. die Mehrzahl der Verknüpfungen erfolgt "para" und/oder ortho.

Als basische Katalysatoren können sowohl organische Basen wie z.B. Amine oder Ammoniumverbindungen als auch anorganische Basen wie z.B. Alkalimetallhydroxide verwendet werden. Bevorzugt werden Alkalimetallhydroxide, besonders bevorzugt Natriumhydroxid und/oder Kaliumhydroxid, in Form von wässrigen Lösungen eingesetzt. Mischungen basischer Katalysatoren können ebenfalls Verwendung finden.

Das molare Verhältnis von Hydroxy-Aromat-Gruppen (wie Phenol) zu Hydroxidionen zu im Bindemittelsystem beträgt bevorzugt 1:0,4 bis 1:1,2 und vorzugsweise 1:0,5 bis 1:1,0.

Es ist nicht notwendig, dass die gesamte Menge an Base bereits zu Beginn der Kondensation zugesetzt wird; üblicherweise erfolgt die Zugabe in zwei oder mehreren Teilschritten, wobei ein Teil auch erst am Ende des Herstellungsprozesses zugegeben werden kann.

Die Herstellung von Resolen ist z.B. in der EP 0323096 B2 und EP 1228128 B1 offenbart. Weitere Bindemittel auf Resolbasis werden beispielsweise in US 4426467, US 4474904 beschrieben. In drei Patenten werden die Resole mit Hilfe von Estern ausgehärtet, wobei die Härtung durch Zugabe eines flüssigen Härters, z.B. eines Lactons (US 4426467) bzw. von Triacetin (US 4474904), erfolgt.

Neben den bereits erwähnten Bestandteilen enthält das Resol Wasser, bevorzugt in einer Menge von 25 Gew.% bis 50 Gew.% bezogen auf das Gewicht der Zusammensetzung. Dabei kann das Wasser einerseits von wässrigen Lösungen stammen, die bei der Binderherstellung eingesetzt werden, andererseits kann es dem Binder aber auch separat zugesetzt werden. Wasser dient neben seiner Funktion als Lösemittel auch beispielsweise dazu, dem Bindemittel eine anwendungsgerechte Viskosität von ca. 15 mPa.s bis ca. 300 mPa.s, vorzugsweise von ca. 15 mPa.s bis ca. 200 mPa.s und besonders bevorzugt von ca. 15 mPa.s bis ca. 100 mPa.s zu verleihen. Die Viskosität wird mit Hilfe eines Brookfield Rotationsviskosimeters, Small Sample, Spindel Nr. 21 bei 100 U/Min und 25°C bestimmt.

Des Weiteren kann das Bindemittel bis zu ca. 50 Gew.% Zusätze wie z.B. Alkohole, Glykole, Tenside und Silane enthalten. Mit Hilfe dieser Additive kann beispielsweise die Benetzbarkeit des Formstoffs durch das Bindemittel und dessen Haftung auf dem Formstoff erhöht werden, was wiederum zu verbesserten Festigkeiten und einer gesteigerten Feuchtigkeitsresistenz führen kann.

Besonders positiv wirkt sich in dieser Hinsicht ein Zusatz von Silanen, z.B. gamma-Aminopropyl-triethoxysilan oder gamma-Glycidoxypropyltrimethoxysilan, in Konzentrationen von ca. 0,1 Gew.% bis ca.1,5 Gew.%, vorzugsweise von ca. 0,2 Gew.% bis ca. 1,3 Gew.% und besonders bevorzugt von ca. 0,3 Gew.% bis ca. 1,0 Gew.% aus, jeweils bezogen auf das Gewicht der Zusammensetzung.

Die zur Härtung der Resole geeigneten Ester (Härter) sind dem Fachmann z.B. aus US 4426467, US 4474904 und US 5405881 bekannt. Sie umfassen Lactone, organische Carbonate und Ester von C1- bis C10-Mono- und Polycarbonsäuren mit C1 bis C10- Mono- und Polyalkoholen. Bevorzugte aber nicht limitierende Beispiele dieser Verbindungen sind Gamma-Butyrolacton, Propylencarbonat, Ethylenglykoldiacetat, Mono-, Di- und Triacetin sowie die Dimethylester von Bernsteinsäure, Glutarsäure und Adipinsäure inklusive deren unter der Bezeichnung DBE bekanntes Gemisch. Auf Grund unterschiedlicher Verseifungsgeschwindigkeiten der einzelnen Ester verläuft die Härtungsgeschwindigkeit der Resole je nach eingesetztem Ester unterschiedlich rasch, was auch die Festigkeiten beeinflussen kann. Durch Mischen von zwei oder mehreren Estern kann man die gewünschte Aushärtezeit innerhalb weiter Grenzen variieren.

Eine Möglichkeit zur Modifikation der Esterkomponente besteht in der Zugabe von Benzyletherharzen entsprechend US 4988745, von Epoxverbindungen entsprechend US 5405881 und/oder von Polyphenolharzen entsprechend US 5424376, jeweils in Mengen bis zu ca. 40 Gew% bezogen auf die Esterkomponente.. Außerdem kann die Esterkomponente bis zu ca. 50 Gew.% weitere Bestandteile enthalten wie z. B. die bereits bei den Bindemitteln genannten Alkohole, Glykole, Tenside und Silane.

Die Zugabemenge an Härter beträgt für die Erfindung üblicherweise 10 Gew.% bis 50 Gew.%, vorzugsweise 10 Gew.% bis 40 Gew.% und besonders bevorzugt 10 Gew.% bis 30 Gew.%, jeweils bezogen auf die Menge an Bindemittel.

Weiterhin können die erfindungsgemäßen Formstoffmischungen einen Anteil eines amorphen SiO₂ enthalten. Insbesondere handelt es sich um partikuläres amorphes SiO₂. Synthetisch hergestelltes partikuläres amorphes Siliciumdioxid ist besonders bevorzugt.

Bei dem amorphen SiO₂ kann es sich insbesondere um folgende Typen handeln:
a) amorphes SiO₂ erhalten durch Fällung aus einer Alkalisilikatlösung,
b) amorphes SiO₂ erhalten durch Flammhydrolyse von SiCl₄,
c) amorphes SiO₂ erhalten durch Reduktion von Quarzsand mit Koks oder Anthrazit zu Siliciummonoxid mit anschließender Oxidation zu SiO₂,
d) amorphes SiO₂ erhalten aus dem Prozess der thermischen Zersetzung von ZrSiO₄ zu ZrO₂ und SiO₂,
e) amorphes SiO₂ erhalten durch Oxidation von metallischem Si mittels eines sauerstoffhaltigen Gases, und/oder
f) amorphes SiO₂ erhalten durch Schmelzen von kristallinem Quarz mit anschließendem raschem Abkühlen.
c) schließt sowohl Prozesse ein, bei denen das amorphe SiO₂ gezielt als Hauptprodukt hergestellt wird als auch solche, bei denen es als Nebenprodukt anfällt, wie z.B. bei der Produktion von Silicium oder Ferrosilicium.

Als amorphes SiO₂ können sowohl synthetisch hergestellte als auch natürlich vorkommende Kieselsäuren eingesetzt werden. Letztere sind z.B. aus DE 102007045649 bekannt, sind aber nicht bevorzugt, da sie i.d.R. nicht unerhebliche kristalline Anteile enthalten und deshalb als karzinogen eingestuft sind. Unter *synthetisch* wird nicht natürlich vorkommendes amorphes SiO₂ verstanden, d. h. dessen Herstellung eine bewusst durchgeführte chemische Reaktion umfasst, wie sie von einem Menschen veranlasst wird, z.B. die Herstellung von Kieselsolen durch Ionenaustauschprozesse aus Alkalisilikatlösungen, die Ausfällung aus Alkalisilikatlösungen, die Flammhydrolyse von Siliciumtetrachlorid, die Reduktion von Quarzsand mit Koks im Lichtbogenofen bei der Herstellung von Ferrosilicium und Silicium. Das nach den beiden letztgenannten Verfahren hergestellte amorphe SiO₂ wird auch als pyrogenes SiO₂ bezeichnet.

Gelegentlich wird unter synthetischem amorphem Siliziumdioxid nur Fällungskieselsäure (CAS-Nr. 112926-00-8) und flammhydrolytisch hergestelltes SiO₂ (Pyrogenic Silica, Fumed Silica, CAS-Nr. 112945-52-5) verstanden, während das bei der Ferrosilicium- bzw. Siliciumherstellung entstandene Produkt lediglich als amorphes Siliziumdioxid (Silica Fume, Microsilica, CAS-Nr. 69012-64-12) bezeichnet wird. Für die Zwecke der vorliegenden Erfindung wird auch das bei der Ferrosilicium- bzw. Siliciumherstellung entstandene Produkt als amorphes SiO₂ verstanden.

Bevorzugt eingesetzt werden Fällungskieselsäuren und pyrogenes, d.h. flammhydrolytisch oder im Lichtbogen hergestelltes Siliziumdioxid. Insbesondere bevorzugt eingesetzt werden durch thermische Zersetzung von ZrSiO₄ hergestelltes amorphes Siliziumdioxid (beschrieben in der DE 102012020509) sowie durch Oxidation von metallischem Si mittels eines sauerstoffhaltigen Gases hergestelltes SiO₂ (beschrieben in der DE 102012020510).

Bevorzugt ist auch Quarzglaspulver (hauptsächlich amorphes Siliziumdioxid), das durch Schmelzen und rasches Wiederabkühlen aus kristallinem Quarz hergestellt wurde, so dass die Partikel kugelförmig und nicht splittrig vorliegen (beschrieben in der DE 102012020511). Die mittlere Primärpartikelgröße des partikulären amorphen Siliziumdioxids kann zwischen 0,05 µm und 10 µm, insbesondere zwischen 0,1 µm und 5 µm, besonders bevorzugt zwischen 0,1 µm und 2 µm betragen. Die Primärpartikelgröße kann z.B. mit Hilfe von dynamischer Lichtstreuung (z.B. Horiba LA 950) bestimmt sowie durch Rasterelektronenmikroskop-Aufnahmen (REM-Aufnahmen mit z.B. Nova NanoSEM 230 der Firma FEI) überprüft werden. Des Weiteren konnten mit Hilfe der REM-Aufnahmen Details der Primärpartikelform bis in die Größenordnung von 0,01 µm sichtbar gemacht werden. Die Siliziumdioxid-Proben wurden für die REM-Messungen in destilliertem Wasser dispergiert und anschließend auf einem mit Kupferband beklebten Aluminiumhalter aufgebracht, bevor das Wasser verdampft wurde.

Des Weiteren wurde die spezifische Oberfläche des partikulären amorphen Siliziumdioxids mithilfe von Gasadsorptionsmessungen (BET-Verfahren) nach DIN 66131 bestimmt. Die spezifische Oberfläche des partikulären amorphen SiO₂ liegt zwischen 1 und 200 m²/g, insbesondere zwischen 1 und 50 m²/g, besonders bevorzugt kleiner 17 m²/g oder sogar kleiner 15 m²/g. Ggfs. können die Produkte auch gemischt werden, z.B. um gezielt Mischungen mit bestimmten Partikelgrößenverteilungen zu erhalten.

Das partikuläre amorphe SiO₂ kann unterschiedliche Mengen an Nebenprodukten enthalten. Beispielhaft seien hier genannt:
- Kohlenstoff im Falle der Reduktion von Quarzsand mit Koks oder Anthrazit
- Eisenoxide und/oder Si im Falle der Herstellung von Silicium oder Ferrosilicium
- ZrO₂ im Falle der thermischen Zersetzung von ZrSiO₄ zu ZrO₂ und SiO₂ Weitere Nebenprodukte können z.B. Al₂O₃, P₂O₅, HfO₂, TiO₂, CaO, Na₂O und K₂O sein.

Die Menge an amorphem SiO₂, die der eingesetzten Formstoffmischung zugesetzt wird, liegt üblicherweise zwischen 0,05 Gew.% und 3 Gew.%, bevorzugt zwischen 0,1 Gew.% und 2,5 Gew.% und besonders bevorzugt zwischen 0,1Gew.% und 2 Gew.%, jeweils bezogen auf den Formgrundstoff.

Die Zugabe des amorphen SiO₂ zum Formgrundstoff kann in Form einer wässrigen Paste, als Aufschlämmung in Wasser oder als trockenes Pulver erfolgen. Letzteres wird dabei bevorzugt. Das partikulare amorphe SiO₂ wird vorzugsweise als Pulver (einschließend Stäube) eingesetzt. Das nach der vorliegenden Erfindung vorzugsweise eingesetzte partikuläre amorphe Siliziumdioxid hat einen Wassergehalt von kleiner 15 Gew.%, insbesondere kleiner 5 Gew.% und besonders bevorzugt von kleiner 1 Gew.%.

Das amorphe SiO₂ liegt vorzugsweise partikulär vor. Die Teilchengröße des partikulären amorphen Siliziumdioxids beträgt vorzugsweise weniger als 300 µm, bevorzugt weniger als 200 µm, insbesondere bevorzugt weniger als 100 µm und weist z.B. eine mittlere Primärpartikelgröße zwischen 0,05 µm und 10 µm auf. Der Siebrückstand des partikulären amorphen SiO₂ bei einem Durchgang durch ein Sieb mit 125 µm Maschenweite (120 mesh) beträgt vorzugsweise nicht mehr als 10 Gew.%, besonders bevorzugt nicht mehr als 5 Gew.% und ganz besonders bevorzugt nicht mehr als 2 Gew.%. Unabhängig hiervon beträgt der Siebrückstand auf einem Sieb mit einer Maschenweite von 63 µm weniger als 10 Gew.-%, vorzugsweise weniger als 8 Gew.%. Die Bestimmung des Siebrückstands erfolgt dabei nach dem in der DIN 66165 (Teil 2) beschriebenen Maschinensiebverfahren, wobei zusätzlich ein Kettenring als Siebhilfe verwendet wird.

Die Reihenfolge der Zugabe des amorphem SiO₂ zum Bindemittel und/oder zum Formgrundstoff ist nicht entscheidend. Sie kann sowohl vor als auch nach oder zusammen mit dem Bindemittel erfolgen. Vorzugsweise erfolgt aber zuerst die Zugabe des amorphen SiO₂ und dann die Bindemittelzugabe.

Außerdem kann man dem Formgrundstoff noch ggfs. weitere in der Gießereiindustrie übliche Zusätze wie z.B. gemahlene Holzfasern oder mineralische Additive wie Eisenoxid etc. untermischen, wobei deren Anteil üblicherweise 0 Gew.% bis 6 Gew.%, bevorzugt 0 Gew.% bis 5 Gew.% und besonders bevorzugt 0 Gew.% bis 4 Gew.% beträgt, bezogen auf den Formgrundstoff.

Weiterhin betrifft die Erfindung ein Verfahren zur Herstellung einer Gießform (oder allgemein Körpers) umfassend die Schritte
a) Mischen des feuerfesten Formgrundstoffes mit der Esterkomponente und ggfs. mit dem anorganischen Additiv sowie ggfs. den weiteren Zusätzen zur Erhalt einer Formstoffmischung,
b) Ausbreiten einer dünnen Schicht mit einer Schichtstärke von 1 bis ca. 6, bevorzugt 1 bis ca. 5 und besonders bevorzugt 1 bis 3 Körnern des in a) hergestellten Formstoffmischung auf einer definierten Arbeitsfläche,
c) selektives Bedrucken der dünnen Schicht der Formstoffmischung mit dem Bindemittel an den von den CAD-Daten vorgegebenen Stellen, wobei das Bindemittel durch den Kontakt mit dem Ester zumindest teilweise aushärtet,
d) mehrfaches Wiederholen der Schritte b) und c) bis zur Fertigstellung der Gießform,
e1) Nachhärtung der zumindest teilgehärteten Gießform in einem Ofen oder mittels Mikrowelle ohne vorherige Entfernung der ungebundenen Formstoffmischung oder alternativ zu e1)
e2) Entfernen der ungebundenen Formstoffmischung von der zumindest teilgehärteten Gießform.

Sobald die Festigkeiten es gestatten, kann die ungebundene Formstoffmischung im Anschluss an Schritt e1) von der Gießform entfernt und diese der weiteren Behandlung, z.B. der Vorbereitung zum Metallguss zugeführt werden.

Im Anschluss an Schritt e2) kann die Gießform, falls erforderlich, durch konventionelle Maßnahmen wie der Lagerung bei erhöhten Temperaturen oder mittels Mikrowellen nachgehärtet werden. Sobald die Festigkeiten es gestatten, kann die Gießform der weiteren Behandlung, z.B. der Vorbereitung zum Metallguss zugeführt werden.

Die ungebundene Formstoffmischung kann bei beiden Alternativen nach der Entfernung von der zumindest teilgehärteten Gießform der Produktion einer weiteren Gießform zugeführt werden.

Das Bedrucken erfolgt z.B. mit einem eine Vielzahl von Düsen aufweisenden Drucckopf, wobei die Düsen vorzugsweise einzeln selektiv ansteuerbar sind. Nach einer weiteren Ausgestaltung wird der Druckkopf zumindest in einer Ebenen von einem Computer gesteuert bewegt und die Düsen tragen das flüssige Bindemittel schichtweise auf. Der Druckkopf kann z.B. ein Drop-on-Demand Druckkopf mit Bubble-Jet oder Piezo-Technik sein.

Anhand der folgenden Beispiele soll die Erfindung näher erläutert werden, ohne auf diese beschränkt zu sein.

### Beispiele

Der Einfluss des Formgrundstoffs und des Mikrosilicas auf die Festigkeiten wurde zunächst anhand von konventionellen Prüfkörpern, den sog. Georg-Fischer-Prüfriegeln, getestet.

Die später erfolgte Herstellung von Gießformen mittels der 3-D-Drucktechnik bestätigte die dabei gewonnenen Erkenntnisse.

### 1. Herstellung der Körper

### 1.1. Ohne Zugabe von SiO₂

Der Formstoff wurde in die Schüssel eines Mischers der Fa. Hobart (Modell HSM 10) eingefüllt. Unter Rühren wurden anschließend zuerst der Härter und dann das Bindemittel zugegeben und jeweils 1 Minute intensiv mit dem Formgrundstoff vermischt. Die Art des Formgrundstoffs, des Härters und des Binders sowie die jeweiligen Zugabemengen sind in Tab. 1 aufgeführt.

**Tabelle 1**

| Mischung | Formstoff [100 GT] | SiO₂ ^{(a)} [GT] | Härter ^{(b)} [GT] | Binder ^{(c)} [GT] |
|---|---|---|---|---|
| 1 | H 32 ^{(d)} | | 0,3 | 1,5 |
| 2 | H 32 ^{(d)} | 0,3 | 0,3 | 1,5 |
| 3 | Spherichrome ^{(e)} | | 0,3 | 1,5 |
| 4 | Spherichrome ^{(e)} | 0,3 | 0,3 | 1,5 |
| 5 | Chromit ^{(f)} | | 0,3 | 1,5 |
| 6 | Chromit ^{(f)} | 0,3 | 0,3 | 1,5 |
| 7 | Bauxit ^{(g)} | | 0,3 | 1,5 |
| 8 | Bauxit^{(g)} | 0,3 | 0,3 | 1,5 |
| 9 | Zirkon ^{(h)} | | 0,3 | 1,5 |
| 10 | Zirkon ^{(h} | 0,3 | 0,3 | 1,5 |
| 11 | Cerabeads ⁽ⁱ⁾ | | 0,3 | 1,5 |
| 12 | Cerabeads ⁽ⁱ⁾ | 0,3 | 0,3 | 1,5 |

| | | | | |
|---|---|---|---|---|
| (a) Possehl Mikrosilica POS B-W 90 LD (Possehl Erzkontor GmbH; Herstellungsprozess: Produktion von ZrO₂ und SiO₂ aus ZrSiO4 (b) Katalysator 5090 (ASK Chemicals GmbH) Triacetin (c) NOVASET 700 RPT (d) Quarsand Haltern (MK 032) Quarzwerke (e) Chromitsand (Oregon Resoures Corporation- in Europa -Fa. Possehl Erzkontor GmbH) (f) Chromerzsand 0,1-0,4MM (g) Bauxit Sand H 27 (h) Zirkonsand (Ost) (i) Cerabeads 650 | | | | |

### 1.2. Mit Zugabe von SiO₂

Es wurde wie bei 1.1. verfahren mit dem Unterschied, dass nach der Härterzugabe noch das synthetische amorphe SiO₂ zugegeben und ebenfalls 1 Minute untergemischt wurde. Die Art des Formgrundstoffs, des Härters und des Binders sowie die jeweiligen Zugabemengen sind in Tab. 1 aufgeführt.

### 2. Herstellung von Prüfriegeln

Für die Prüfung der Körper wurden quaderförmige Prüfriegel mit den Abmessungen 220 mm x 22,36 mm x 22,36 mm hergestellt (sog. Georg-Fischer- Riegel).

Ein Teil der nach 1. hergestellten Mischungen wurde in ein Formwerkzeug mit 8 Gravuren eingebracht, durch Pressen mit einer Handplatte verdichtet und nach Ablauf der Ausschalzeit dem Formwerkzeug entnommen.

Die Verarbeitungszeit (VZ), d.h. die Zeit, innerhalb derer sich eine Mischung problemlos verdichten lässt, wurde visuell bestimmt. Man kann das Überschreiten der Verarbeitungszeit daran erkennen, dass eine Mischung nicht mehr frei fließt, sondern schollenartig abrollt. Die Verarbeitungszeiten der einzelnen Mischungen sind in Tab. 2 angegeben.

Zur Ermittlung der Ausschalzeit (AZ), d.h. der Zeit, nach der sich eine Mischung soweit verfestigt hat, dass sie dem Formwerkzeug entnommen werden kann, wurde ein zweiter Teil der jeweiligen Mischung von Hand in eine Rundform von 100 mm Höhe und 100 mm Durchmesser eingefüllt und ebenfalls mit einer Handplatte verdichtet. Anschließend wurde die Oberflächenhärte der verdichteten Mischung in bestimmten Zeitintervallen mit dem Georg-Fischer-Oberflächenhärteprüfer getestet. Sobald eine Mischung so hart ist, dass die Prüfkugel nicht mehr in die Kernoberfläche eindringt, ist die Ausschalzeit erreicht. Die Ausschalzeiten der einzelnen Mischungen sind in Tab. 2 angegeben.

### 3. Prüfung der Biegefestigkeiten

Zur Bestimmung der Biegefestigkeiten wurden die Prüfriegel in ein Georg-Fischer-Festigkeitsprüfgerät, ausgerüstet mit einer 3-Punkt-Biegevorrichtung, eingelegt und die Kraft gemessen, welche zum Bruch der Prüfriegel führte. Die Biegefestigkeiten wurden nach folgendem Schema bestimmt:
- 4 Stunden nach dem Formen
- 24 Stunden nach dem Formen
- 24 Stunden nach dem Formen plus 30 Min. Nachtempern bei 120°C

Die Ergebnisse sind in Tab. 2 aufgeführt.

**Tabelle 2**

| | | | Biegefestigkeiten [N/cm²] | | |
|---|---|---|---|---|---|
| Mischung | VZ ^{(a)} / AZ ^{(b)} Min. | | 4 Std. | 24 Std. | 24 Std ^{(c)} 120°C/30Min/kalt |
| 1 | 5 | 22 | 155 | 210 | 250 |
| 2 | 5 | 25 | 160 | 220 | 310 |
| 3 | 4 | 35 | 190 | 295 | 435 |
| 4 | 4 | 30 | 310 | 420 | 895 |
| 5 | 2 | 13 | 195 | 200 | 140 |
| 6 | 2 | 12 | 240 | 230 | 145 |
| 7 | 1 | 16 | 205 | 285 | 300 |
| 8 | 1 | 17 | 245 | 310 | 360 |
| 9 | 2 | 15 | 210 | 275 | 320 |
| 10 | 2 | 15 | 255 | 300 | 360 |
| 11 | 1 | 20 | 165 | 270 | 320 |
| 12 | 1 | 18 | 240 | 265 | 410 |

| | | | | | |
|---|---|---|---|---|---|
| (a) Verarbeitungszeit (b) Ausschalzeit (c) 24h alte Kerne /30 Min bei 120°c getempert / Festigkeiten - nach Abkühlen gemessen | | | | | |

Aus Tab. 2 erkennt man
- Spherichrome® ist dem bisher in den Gießereien eingesetzten südafrikanischen Chromerzsand bei allen Festigkeiten überlegen.
- Spherichrome® zeigt bei der Nachtemperung einen Festigkeitsanstieg, der den der übrigen getesteten Formgrundstoffe weit übertrifft.
- Der Zusatz von Microsilica verbessert bei allen Formgrundstoffen die Festigkeiten.

### 4. Gießversuche

Nach der 3-D-Drucktechnik unter Verwendung eines estergehärteten Phenolresols hergestellte Gießformen zeigten beim ungeschlichteten Abguss mit Eisen bei 1400°C eine glattere Gussoberfläche und weniger Gaseinschlüsse als Gießformen, die mittels 3-D-Drucktechnik unter Verwendung eines säurehärtenden Furanharzes hergestellt worden waren.

## Patentansprüche

1. Verfahren zum schichtweisen Aufbau von Körpern umfassend zumindest die folgenden Schritte:
a) Zusammenbringen von zumindest einem feuerfestem Formgrundstoff und zumindest einem Ester zum Erhalt einer Ester imprägnierten Formstoffmischung,
b) Ausbreiten einer dünnen Schicht mit einer Schichtdicke von 1 bis 6, bevorzugt 1 bis 5 und besonders bevorzugt 1 bis 3 Körnern der Ester imprägnierten Formstoffmischung,
c) Bedrucken ausgewählter Bereiche der dünnen Schicht mit einem Bindemittel umfassend zumindest Resole zur Härtung der Bereiche,
d) mehrfaches Wiederholen der Schritte b) und c) zur Fertigstellung eines zumindest teilgehärteten dreidimensionalen Körpers.

2. Verfahren nach Anspruch 1 umfassend weiterhin die folgenden Schritte:
e1) Nachhärtung des teilgehärteten dreidimensionalen Körpers in einem Ofen oder mittels Mikrowellen und erst nachfolgende Entfernung der ungebundenen Formstoffmischung oder
e2) Entfernen der ungebundenen Formstoffmischung von der zumindest teilgehärteten Gießform.

3. Verfahren nach Anspruch 1 oder 2, wobei der feuerfeste Formgrundstoff Quarz-, Zirkon- oder Chromerzsand, Olivin, Vermiculit, Bauxit, Schamotte, Glasperlen, Glasgranulat, Aluminiumsilikatmikrohohlkugeln und deren Mischungen umfasst, insbesondere mit überwiegend runder Partikelform, und vorzugsweise zu mehr als 50 Gew.% aus Quarzsand, bezogen auf den feuerfesten Formgrundstoff, besteht.

4. Verfahren nach zumindest einem der vorhergehenden Ansprüche, wobei größer 80 Gew.%, vorzugsweise größer 90 Gew.%, und besonders bevorzugt größer 95 Gew.%, der Formstoffmischung feuerfester Formgrundstoff ist.

5. Verfahren nach zumindest einem der vorhergehenden Ansprüche, wobei der feuerfeste Formgrundstoff mittlere Partikeldurchmesser von 100 µm bis 600 µm, bevorzugt zwischen 120 µm und 550 µm aufweist, bestimmt durch Siebanalyse.

6. Verfahren nach zumindest einem der vorhergehenden Ansprüche, wobei weiterhin amorphes Siliziumdioxid zugesetzt wird, insbesondere der Formstoffmischung, vorzugsweise mit einer nach BET bestimmten Oberfläche zwischen 1 und 200 m²/g, vorzugsweise größer gleich 1 m²/g und kleiner gleich 30 m²/g, besonders bevorzugt von kleiner gleich 15 m²/g.

7. Verfahren nach Anspruch 6, wobei das amorphe Siliziumdioxid aus der Gruppe bestehend aus: Fällungskieselsäure, flammhydrolytisch oder im Lichtbogen hergestelltem pyrogenen Siliziumdioxid, durch thermische Zersetzung von ZrSiO₄ hergestelltem amorphen Siliziumdioxid, durch Oxidation von metallischem Silizium mittels eines sauerstoffhaltigen Gases hergestelltem Siliziumdioxid, Quarzglaspulver mit kugelförmigen Partikeln, das durch Schmelzen und rasches Wiederabkühlen aus kristallinem Quarz hergestellt wurde, und deren Mischungen ausgewählt ist und vorzugsweise durch thermische Zersetzung von ZrSiO₄ hergestelltes amorphes Siliziumdioxid enthält oder daraus besteht.

8. Verfahren nach zumindest einem der Ansprüche 6 oder 7, wobei das amorphe Siliziumdioxid in Mengen von 0,1 bis 2 Gew.%, vorzugsweise 0,1 bis 1,5 Gew.%, jeweils bezogen auf den feuerfesten Formgrundstoff eingesetzt wird.

9. Verfahren nach zumindest einem der Ansprüche 6 bis 8, wobei das amorphe Siliziumdioxid einen Wassergehalt von kleiner 5 Gew.% und besonders bevorzugt kleiner 1 Gew.% aufweist.

10. Verfahren nach zumindest einem der Ansprüche 6 bis 9, wobei das amorphe Siliziumdioxid partikuläres amorphes Siliziumdioxid ist, vorzugsweise mit einem mittleren durch dynamische Lichtstreuung bestimmten primären Partikeldurchmesser zwischen 0,05 µm und 10 µm, insbesondere zwischen 0,1 µm und 5 µm und besonders bevorzugt zwischen 0,1 µm und 2 µm.

11. Verfahren nach zumindest einem der vorhergehenden Ansprüche, wobei die Resole in einer Menge von 0,8 bis 5 Gew. %, vorzugsweise von 1 bis 4 Gew. %, jeweils bezogen auf das Gewicht des feuerfesten Formgrundstoffs, zugesetzt werden.

12. Verfahren nach zumindest einem der vorhergehenden Ansprüche, wobei die Körper nachträglich mit CO₂ gehärtet werden.

13. Verfahren nach zumindest einem der vorhergehenden Ansprüche, wobei die Formstoffmischung eine / oder mehrere Basen enthält, bevorzugt Alkalihydroxide.

14. Verfahren nach zumindest einem der vorhergehenden Ansprüche, wobei die Resole in Form einer wässrigen alkalischen Lösung eingesetzt werden, vorzugsweise mit einem Festkörperanteil von 30 bis 75 Gew.%. und einem pH-Wert größer 12.

15. Verfahren nach zumindest einem der vorhergehenden Ansprüche, wobei der Ester eine alkalisch hydrolisierbare Ester- oder Phosphatester-Verbindung ist.

16. Verfahren nach zumindest einem der vorhergehenden Ansprüche, wobei der Körper eine Form oder ein Kern für den Metallguss ist.

17. Verfahren nach zumindest einem der vorhergehenden Ansprüche, wobei das Bedrucken mit einem eine Vielzahl von Düsen aufweisenden Druckkopf erfolgt, wobei die Düsen vorzugsweise einzeln selektiv ansteuerbar sind.

18. Verfahren nach Anspruch 17, wobei der Druckkopf zumindest in einer Ebenen von einem Computer gesteuert bewegbar ist und die Düsen das flüssige Bindemittel schichtweise auftragen.

19. Verfahren nach Anspruch 17 oder 18, wobei der Druckkopf ein Drop-on-Demand Druckkopf mit Bubble-Jet oder Piezo-Technik ist.

## Claims

1. A method for the layer-wise building of bodies, comprising at least the following steps:
a) combining of at least one refractory mold base material and at least one ester in order to obtain an ester-impregnated mold material mixture,
b) spreading of a thin layer having a layer thickness of 1 to 6, preferably 1 to 5, particularly preferably 1 to 3, grains of the ester-impregnated mold material mixture,
c) printing of selected areas of the thin layer with a binder comprising at least resoles for curing the areas,
d) multiple repetitions of steps b) and c) for the fabrication of at least a partially cured three-dimensional body.

2. The method according to Claim 1, additionally comprising the following steps:
e1) secondary curing of the partially cured three-dimensional body in a furnace or by microwaves, and only thereafter, removal of the unbound mold material mixture, or
e2) removal of the unbound mold material mixture from the at least partially cured casting mold.

3. The method according to Claim 1 or 2, wherein the refractory mold base material comprises quartz sand, zircon sand or chromium ore sand, olivine, vermiculite, bauxite, fire clay, glass beads, glass granulate, aluminum silicate hollow microspheres and mixtures thereof, having, in particular, predominantly a round particle shape, and preferably consists of more than 50% by weight of quartz sand, with respect to the refractory mold base material.

4. The method according to at least one of the preceding claims, wherein more than 80% by weight, preferably more than 90% by weight, and particularly preferably more than 95% by weight of the mold material mixture is refractory mold base material.

5. The method according to at least one of the preceding claims, wherein the refractory mold base material has a mean particle diameter of 100 µm to 600 µm, preferably between 120 µm and 550 µm, determined by sieve analysis.

6. The method according to at least one of the preceding claims, wherein furthermore amorphous silicon dioxide is added, particularly to the mold material mixture, preferably having a surface area, determined according to BET, between 1 and 200 m²/g, preferably greater than or equal to 1 m²/g and less than or equal to 30 m²/g, particularly preferably less than or equal to 15 m²/g.

7. The method according to Claim 6, wherein the amorphous silicon dioxide is selected from the group consisting of: precipitation silica, pyrogenic silicon dioxide produced by flame hydrolysis or in the electric arc furnace, amorphous silicon dioxide produced by thermal decomposition of ZrSiO₄, silicon dioxide produced by oxidation of metallic silicon by means of an oxygen-containing gas, quartz glass powder with spherical particles, which was prepared by melting and rapid re-cooling from crystalline quartz, and mixtures thereof, and preferably contains or consists of amorphous silicon dioxide prepared by thermal decomposition of ZrSiO₄.

8. The method according to at least one of Claims 6 or 7, wherein the amorphous silicon dioxide is used in quantities from 0.1 to 2% by weight, preferably 0.1 to 1.5% by weight, in each case with respect to the refractory mold base material.

9. The method according to at least one of Claims 6 to 8, wherein the amorphous silicon dioxide has a water content of less than 5% by weight and particularly preferably less than 1% by weight.

10. The method according to at least one of Claims 6 to 9, wherein the amorphous silicon dioxide is particulate amorphous silicon dioxide, preferably with a mean primary particle diameter, determined by dynamic light scattering, between 0.05 µm and 10 µm, in particular between 0.1 µm and 5 µm, and particularly preferably between 0.1 µm and 2 µm.

11. The method according to at least one of the preceding claims, wherein the resoles are added in a quantity from 0.8 to 5% by weight, preferably from 1 to 4% by weight, in each case with respect to the weight of the refractory mold base material.

12. The method according to at least one of the preceding claims, wherein the bodies are subsequently cured with CO₂.

13. The method according to at least one of the preceding claims, wherein the mold material mixture contains one / or more bases, preferably alkali hydroxides.

14. The method according to at least one of the preceding claims, wherein the resoles are used in the form of an aqueous alkaline solution, preferably with a solid content from 30 to 75% by weight and a pH above 12.

15. The method according to at least one of the preceding claims, wherein the ester is an ester compound or a phosphate ester compound that can undergo alkaline hydrolysis.

16. The method according to at least one of the preceding claims, wherein the body is a mold or a core for metal casting.

17. The method according to at least one of the preceding claims, wherein the printing occurs by means of a printing head comprising a plurality of nozzles, wherein the nozzles are preferably selectively controllable individually.

18. The method according to Claim 17, wherein the printing head can be moved in a controlled manner by a computer at least in one plane, and the nozzles apply the liquid binder layer-wise.

19. The method according to Claim 17 or 18, wherein the printing head is a drop-on-demand printing head with bubble jet or piezo technology.

## Revendications

1. Procédé pour la construction par couches de corps, comportant au moins les étapes suivantes :
a) combinaison d'au moins une matière de base de moulage réfractaire et d'au moins un ester pour l'obtention d'un mélange de matière à mouler imprégné par ester ;
b) étalement d'une couche mince ayant une épaisseur de couche de 1 à 6, de préférence de 1 à 5, et, de façon particulièrement préférée, de 1 à 3 grains du mélange de matière à mouler imprégné par ester ;
c) impression de zones choisies de la couche mince par un liant comportant au moins des résols pour le durcissement des zones ;
d) répétition multiple des étapes b) et c) pour la réalisation d'un corps tridimensionnel au moins partiellement durci.

2. Procédé selon la revendication 1, comportant en outre les étapes suivantes :
e1)post-durcissement du corps tridimensionnel partiellement durci dans un four ou par micro-ondes et seulement ensuite retrait du mélange de matière à mouler non lié ou
e2) retrait du mélange de matière à mouler non lié du moule de coulée au moins partiellement durci.

3. Procédé selon l'une des revendications 1 ou 2, dans lequel la matière de base de moulage réfractaire comporte du sable de quartz, du sable de zirconium ou du sable de minerai de chrome, de l'olivine, de la vermiculite, de la bauxite, de la chamotte, des perles de verre, du granulat de verre, des microbilles creuses de silicate d'aluminium et leurs mélanges, en particulier ayant une forme de particule de façon prédominante arrondie, et, de préférence, se compose à plus de 50 % en poids de sable de quartz, par rapport à la matière de base de moulage réfractaire.

4. Procédé selon au moins l'une des revendications précédentes, dans lequel plus de 80 % en poids, de préférence plus de 90 % en poids, et, de façon particulièrement préférée, plus de 95 % en poids du mélange de matière à mouler est de la matière de base de moulage réfractaire.

5. Procédé selon au moins l'une des revendications précédentes, dans lequel la matière de base de moulage réfractaire présente un diamètre moyen de particule de 100 µm à 600 µm, de préférence entre 120 µm et 550 µm, déterminé par analyse par tamisage.

6. Procédé selon au moins l'une des revendications précédentes, dans lequel en outre du dioxyde de silicium amorphe est ajouté, en particulier au mélange de matière à mouler, de préférence ayant une surface spécifique déterminée selon BET, entre 1 et 200 m²/g, de préférence supérieure ou égale à 1 m²/g et inférieure ou égale à 30 m²/g, de façon particulièrement préférée, inférieure ou égale à 15 m²/g.

7. Procédé selon la revendication 6, dans lequel le dioxyde de silicium amorphe est choisi dans le groupe consistant en : silice de précipitation, dioxyde de silicium pyrogéné obtenu par voie hydrolytique à la flamme ou dans l'arc électrique, dioxyde de silicium amorphe obtenu par décomposition thermique de ZrSiO₄, dioxyde de silicium obtenu par oxydation de silicium métallique au moyen d'un gaz contenant de l'oxygène, poudre de verre de quartz ayant des particules sphériques, qui a été obtenue par fusion et refroidissement rapide à partir de quartz cristallin, et leurs mélanges, et, de préférence, contient ou consiste en dioxyde de silicium amorphe obtenu par décomposition thermique de ZrSiO₄.

8. Procédé selon au moins l'une des revendications 6 ou 7, dans lequel le dioxyde de silicium amorphe est utilisé dans des quantités de 0,1 à 2 % en poids, de préférence de 0,1 % à 1,5 % en poids, dans chaque cas par rapport à la matière de base de moulage réfractaire.

9. Procédé selon au moins l'une des revendications 6 à 8, dans lequel le dioxyde de silicium amorphe présente une teneur en eau de moins de 5 % en poids et, de façon particulièrement préférée, de moins de 1 % en poids.

10. Procédé selon au moins l'une des revendications 6 à 9, dans lequel le dioxyde de silicium amorphe est le dioxyde de silicium amorphe particulaire, de préférence avec un diamètre moyen de particule primaire déterminé par diffusion dynamique de la lumière entre 0,05 µm et 10 µm, en particulier entre 0,1 µm et 5 µm et, de façon particulièrement préférée, entre 0,1 µm et 2 µm.

11. Procédé selon au moins l'une des revendications précédentes, dans lequel les résols sont ajoutés dans une quantité de 0,8 à 5 % en poids, de préférence de 1 à 4 % en poids, dans chaque cas par rapport au poids de la matière de base de moulage réfractaire.

12. Procédé selon au moins l'une des revendications précédentes, dans lequel les corps sont durcis ultérieurement avec CO₂.

13. Procédé selon au moins l'une des revendications précédentes, dans lequel le mélange de matière à mouler contient une ou plusieurs bases, de préférence des hydroxydes alcalins.

14. Procédé selon au moins l'une des revendications précédentes, dans lequel les résols sont utilisés sous la forme d'une solution alcaline aqueuse, de préférence avec une fraction en matières solides de 30 à 75 % en poids, et une valeur de pH supérieure à 12.

15. Procédé selon au moins l'une des revendications précédentes, dans lequel l'ester est un composé ester ou ester phosphate hydrolysable par voie alcaline.

16. Procédé selon au moins l'une des revendications précédentes, dans lequel le corps est un moule ou un noyau pour la coulée de métal.

17. Procédé selon au moins l'une des revendications précédentes, dans lequel l'impression a lieu avec une tête d'impression présentant une pluralité de buses, les buses étant de préférence commandables individuellement de façon sélective.

18. Procédé selon la revendication 17, dans lequel la tête d'impression est déplaçable commandée par un ordinateur au moins dans un plan et les buses déposent le liant fluide par couches.

19. Procédé selon l'une des revendications 17 ou 18, dans lequel la tête d'impression est une tête d'impression à goutte-sur-demande avec un jet de bulles ou une technique piézo.
